Europäisches Patentamt

European Patent Office

Office européen des brevets

(11) Numéro de publication: **0 234 996**
**A1**

(12) **DEMANDE DE BREVET EUROPEEN**

(21) Numéro de dépôt: **87400173.8**

(22) Date de dépôt: **26.01.87**

(51) Int. Cl.³: **G 07 F 9/10**
**A 47 J 37/12**

(30) Priorité: **27.01.86 FR 8601109**

(43) Date de publication de la demande:
**02.09.87 Bulletin 87/36**

(84) Etats contractants désignés:
**BE DE ES FR GB IT NL**

(71) Demandeur: Beauvalet, Christelle
30, route de Neubourg Gauville la Campagne
F-27930 Evreux(FR)

(71) Demandeur: Beauvalet, Virginie
30, route de Neubourg Gauville la Campagne
F-27930 Evreux(FR)

(72) Inventeur: Beauvalet, Christelle
30, route de Neubourg Gauville la Campagne
F-27930 Evreux(FR)

(72) Inventeur: Beauvalet, Virginie
30, route de Neubourg Gauville la Campagne
F-27930 Evreux(FR)

(74) Mandataire: Laget, Jean-Loup et al,
Cabinet Pierre Loyer 18, Rue de Mogador
F-75009 Paris(FR)

(54) Distributeur de produits alimentaires.

(57) Dispositif de distribution de produits alimentaires conservés dans au moins une chambre de stockage (2, 3), dans lequel l'unité de cuisson (4) est à bain d'huile et comporte une cuve (30) qui communique inférieurement avec un réservoir (31) ; la cuve communique en outre avec le réservoir à leur niveau supérieur par un couloir (34) qui comporte un dispositif de refroidissement (35) pour la condesation des vapeurs de cuisson, et le réservoir comporte un volume lesté (51) mobile verticalement afin de plonger dans le bain d'huile de sorte que le niveau de bain dans l'unité de cuisson varie et recouvre le produit pendant la cuisson.

Fig. 2

EP 0 234 996 A1

Croydon Printing Company Ltd

# Distributeur de produits alimentaires

La présente invention se rapporte aux machines automatiques de distribution de produits alimentaires cuits ou chauffés dans un bain chaud, du type à bain d'huile.

Les produits alimentaires concernés par l'invention sont notamment les pommes de terre frites précuites congelées, les produits frais du type saucisses, ou autres produits à base de viande ou de poisson, mais cette liste n'est pas limitative et l'invention peut être généralisée à tout type de produit nécessitant une cuisson ou un chauffage dans un bain chaud.

Les distributeurs de produits alimentaires chauffés comportent habituellement des chambres séparées, les unes assurant le stockage et la conservation des aliments frais ou congelés (chambres froides), la ou les autres assurant le chauffage ou la cuisson desdits aliments, des dispositifs étant prévus pour prélever les portions d'aliment des chambres froides, les convoyer dans la chambre chaude et les distribuer au consommateur.

La chambre chaude comporte généralement au moins un bain d'huile et selon les techniques employées :

- soit le bain est fixe et la portion d'aliment est placée dans un panier mobile qui plonge dans le bain pour en ressortir après cuisson ; un tel type de machine est décrit au brevet FR-A-2.248.809,

- soit le bain est mobile et le panier contenant la portion d'aliment est fixe, comme c'est le cas de la friteuse décrite au brevet DE-A-1.579.422 où la chambre de cuisson pivote entre deux positions verticale et horizontale, chaque inclinaison déplaçant le niveau de l'huile par rapport au panier.

Cependant, ce dernier type de machine n'est pas satisfaisant car il impose un déplacement de la chambre chaude ce qui complique les liaisons avec les autres chambres voisines : chambres froides, ou réservoir d'huile comme c'est le cas au brevet DE-A-1.579.422.

Cette technique des distributeurs à bain d'huile à niveau variable est encore utilisée dans le brevet EP 0060204. Dans ce distributeur, l'unité de cuisson comporte deux parties communiquant inférieurement: une cuve, qui comporte le panier de cuisson, et un réservoir cylindrique qui comporte un piston au contact de l'huile ,coulissant dans ce cylindre. Le mouvement du piston vers le bas repousse l'huile dans la cuve de cuisson et en fait monter le niveau, et inversement.

Cependant, ce dispositif nécessite d'importantes précisions de construction pour éviter les fuites au niveau du piston, ce qui en augmente les coûts de fabrication.

En outre, un des problèmes de ces distributeurs est le contrôle de l'huile :

    - contrôle des niveaux minimum et maximum: minimum pour immerger toujours complètement la portion, et maximum pour éviter les débordements du bac de cuisson à l'extérieur, qui représentent un danger permanent pour l'environnement,

    - lutte contre le dégagement des vapeurs de cuisson (eau et huile). Ces vapeurs sont désagréables à l'odorat et se condensent sur les surfaces voisines demandant ainsi de fréquents nettoyages. L'amélioration de l'étanchéité est une bonne solution mais elle interdit tout éventuel accès direct supplémentaire à la chambre chaude depuis l'extérieur (par une porte secondaire), pour cuire des aliments différents de ceux prévus dans les chambres froides.

Le dispositif de distribution automatique de produits alimentaires selon l'invention a pour objectif de résoudre les problèmes précédents et pour objet une machine comportant au moins une chambre de stockage et conservation de produits alimentaires, munies chacune

3

d'un dispositif de communication avec une unité de cuisson par bain d'huile ou autre liquide de cuisson, laquelle unité est du type à changement de niveau et comporte : deux parties distinctes, une cuve et un réservoir, remplies partiellement de liquide de cuisson, communiquant entre elles par leur niveau inférieur par une canalisation pour l'écoulement du liquide entre les deux parties une ouverture de remplissage fermée par un bouchon étanche, un entonnoir de réception des produits dans la cuve , un panier de cuisson, des résistances de chauffage du bain et un thermostat, une porte de distribution pour la restitution des produits après cuisson, et ce dispositif est caractérisé en ce que les deux parties en outre communiquent entre elles à leur niveau supérieur par un couloir comportant un dispositif de refroidissement, du type à échange de chaleur, pour la condensation des vapeurs dues à la cuisson, la cuve comportant le panier de cuisson, le réservoir comportant un volume lesté, mobile verticalement dans le réservoir afin de plonger dans le bain de liquide et/ou d'en ressortir, de telle sorte que le niveau du bain dans l'unité de cuisson varie, et que par effet de vases communicants, selon la position du volume, le liquide recouvre le produit ou bien le découvre et le laisse s'égoutter.

Le dispositif est encore remarquable par les caractéristiques suivantes :

- le volume lesté est de conformation identique et de dimensions de section horizontale très voisines de celles du réservoir dans lequel il coulisse, et la valeur de ce volume est au moins égale au volume du panier de cuisson ; il est relié par un câble vertical à un moyen de levage, de type connu en soi, contrôlé par programme, destiné à assurer la descente ou le levage du volume dans le compartiment.

De préférence, le réservoir et le volume sont cylindriques de section horizontale circulaire afin d'autoriser d'éventuelles rotations du volume autour du câble,

- le couloir supérieur de communication des deux compartiments comporte sur sa surface une paroi, creuse intérieurement de refroidissement dont la face inférieure, orientée vers l'intérieur du couloir est conique vers le bas et comporte au sommet du cône un conduit d'évacuation de l'eau condensée, aboutissant dans un vase comportant une ouverture de vidange,

- la paroi de refroidissement comporte les moyens d'alimentation et de vidange. Elle peut être alimentée et réfrigérée en continu,

- le couloir comporte en outre intérieurement un dispositif d'entraînement et d'accélération de l'écoulement de l'air chargé de vapeurs d'eau et d'huile, du type ventilateur ou turbine, et l'unité comprte un orifice de mise à l'air libre muni d'un filtre déodorant, pour assurer la circulation de l'air entraîné par ladite turbine et l'évacuation de l'air comprimé. De préférence l'orifice est situé dans le vase.

- la porte de distribution est inclinée de haut en bas vers l'intérieur de la cuve de cuisson et comporte à sa partie inférieure, du côté cuve, une gouttière pour la récupération de la condensation, et la gouttière est prolongée le long de la paroi de la cuve jusqu'à la conduite ou au vase d'évacuation,

- le panier de cuisson est monté sur un axe de rotation comportant une came provoquant lors de la rotation dudit panier, l'ouverture de la porte de distribution,

- la chambre de stockage de frites est du type comportant à sa partie inférieure une trémie fermée à sa base par un conduit transversal en forme de gouttière, au fond duquel est logée une vis sans fin montée autour d'un cylindre, commandé en rotation par un moteur asservi, et à l'extrémité duquel est disposée une balance munie d'un plateau de réception des frites convoyées par la vis sans fin et d'un contacteur pour arrêter le moteur lorsque le poids désiré est atteint. La balance est caractérisée par le fait qu'elle est montée en rotation de sorte que lorsque le poids de frites est atteint, son plateau pivote et déverse les frites à l'intérieur de l'unité de cuisson et revient à sa position initiale par contrepoids ou équivalent;

- la chambre de stockage de saucisses comporte un cylindre formé d'une ou de plusieurs couronnes concentriques de tubes verticaux cylindriques de stockage, juxtaposés, les tubes des couronnes adjacentes étant décalés tangentiellement.

- le cylindre est monté rotatif autour de son axe vertical et au-dessus d'une fenêtre fixe, destinée au passage des saucisses, située à la périphérie du cylindre sous la couronne, laquelle fenêtre débouche par un conduit sur l'entonnoir de réception des produits, et il est muni d'un dispositif du type à vérin et cliquet qui l'entraîne en rotation pas à pas, ouvre la fenêtre, de telle sorte que les 0234996 saucisses sont distribuées successivement d'une rangée à l'autre.

Selon une variante de réalisation le distributeur automatique est remarquable en outre en ce qu'il comporte :

- sur la paroi de l'unité de cuisson une ouverture et un tiroir destinés à introduire manuellement dans le panier de cuisson des produits à cuire, ledit tiroir étant monté pivotant horizontalement et comportant un volet venant en butée sur les bords de l'ouverture pour éviter, lorsque le tiroir est ouvert, le passage vers l'extérieur des odeurs et des vapeurs d'huile ; le tiroir comporte de plus un panier intérieur monté pivotant vers l'intérieur du compartiment, muni d'un ressort fixé sur le volet, permettant audit panier un léger débattement favorisant l'éjection des produits au moment de la fermeture du tiroir,

- au moins un tube cylindrique faisant saillie depuis une des parois verticales de l'unité de cuisson à un niveau lui permettant de recevoir intérieurement le liquide de cuisson pour réchauffer l'intérieur des produits alimentaires -par exemple du pain- de façon connue en soi, l'extrémité du tube étant conique. De préférence, le tube est coudé verticalement, son extrémité conique est à un niveau situé au-dessus de l'orifice de trop plein et comporte un orifice de fuite pour assurer l'évacuation de l'air lors du remplissage et inversement,

- en outre, une cuvette à double parois entre lesquelles circule le liquide chaud admis par au moins un orifice communicant avec l'une des parties de l'unité de cuisson pour le réchauffage d'un produit frais ou précuit ou d'une sauce, disposé dans un récipient amovible muni d'une poignée, ledit récipient épousant la forme intérieure de la cuvette, ladite cuvette étant protégée de l'environnement par un couvercle.

Le distributeur selon l'invention est muni en outre de moyens, connus en soi, pour le contrôle des différents organes précités : monnayeur, minuteur, thermostat, et tous programmes d'asservissement des moteurs.

Ce nouveau distributeur apporte les avantages suivants :

- le distributeur est de construction simple qui ne nécessite pas de précision coûteuse,

- les vapeurs d'eau sont condensées à l'intérieur de l'unité de cuisson et ne s'échappent pas à l'extérieur de la machine. L'eau condensée peut être vidangée très facilement même pendant le fonctionnement du distributeur,

- les vapeurs de graisse sont véhiculées par le couloir supérieur dans le réservoir où elles se condensent et se mélangent à l'huile. Elles ne s'échappent pas à l'extérieur.

- les différents compartiments sont indépendants et peuvent être nettoyés et remplis indépendamment les uns des autres,

Afin de mieux comprendre l'invention, à titre d'exemple de réalisation, on a représenté au dessin annexé :

Figure 1, une vue d'ensemble schématique éclatée des différents sous-ensembles de la machine selon l'invention ;

Figure 2, une vue schématique éclatée de profil de l'unité de cuisson de la machine de distribution de produits alimentaires selon l'invention ;

Figure 3, une vue de dessus du chargeur de saucisses pour la machine selon la figure 1;

Figure 4, une vue schématique partielle en perspective, d'une variante de la machine selon l'invention ;

Figure 5, une vue schématique de profil du tiroir supplémentaire de la machine de la figure 4;

Figure 6, une vue schématique en coupe de la cuvette de la machine de la figure 4;

Figure 7, une vue schématique en perspective d'un détail du dispositif d'alimentation de la chambre 2 de la figure 1.

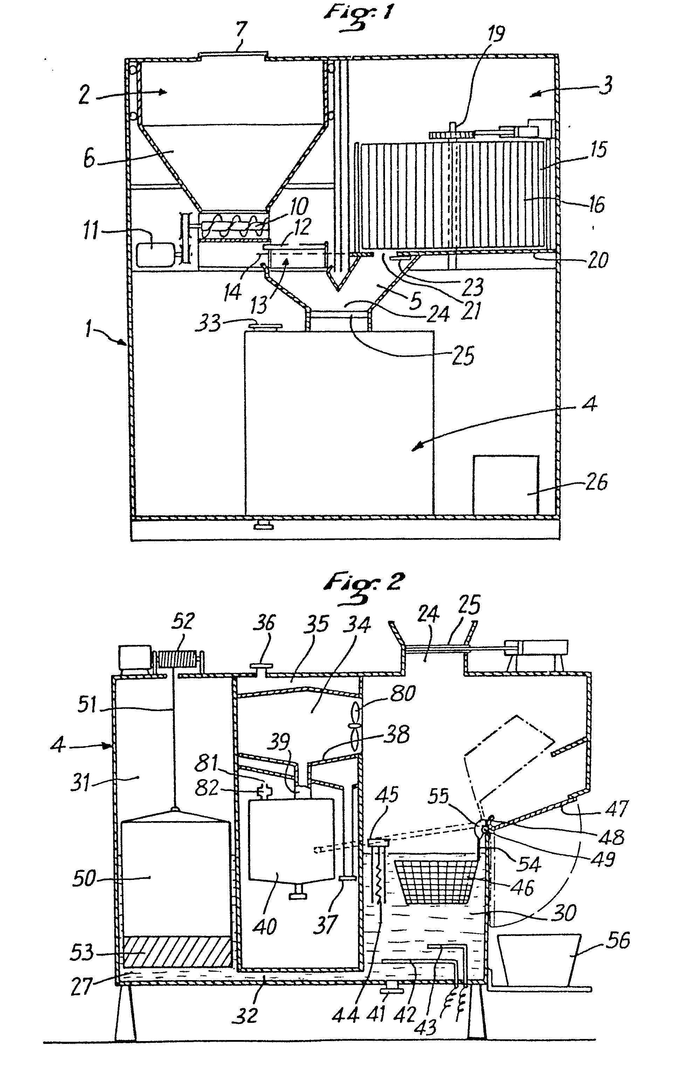

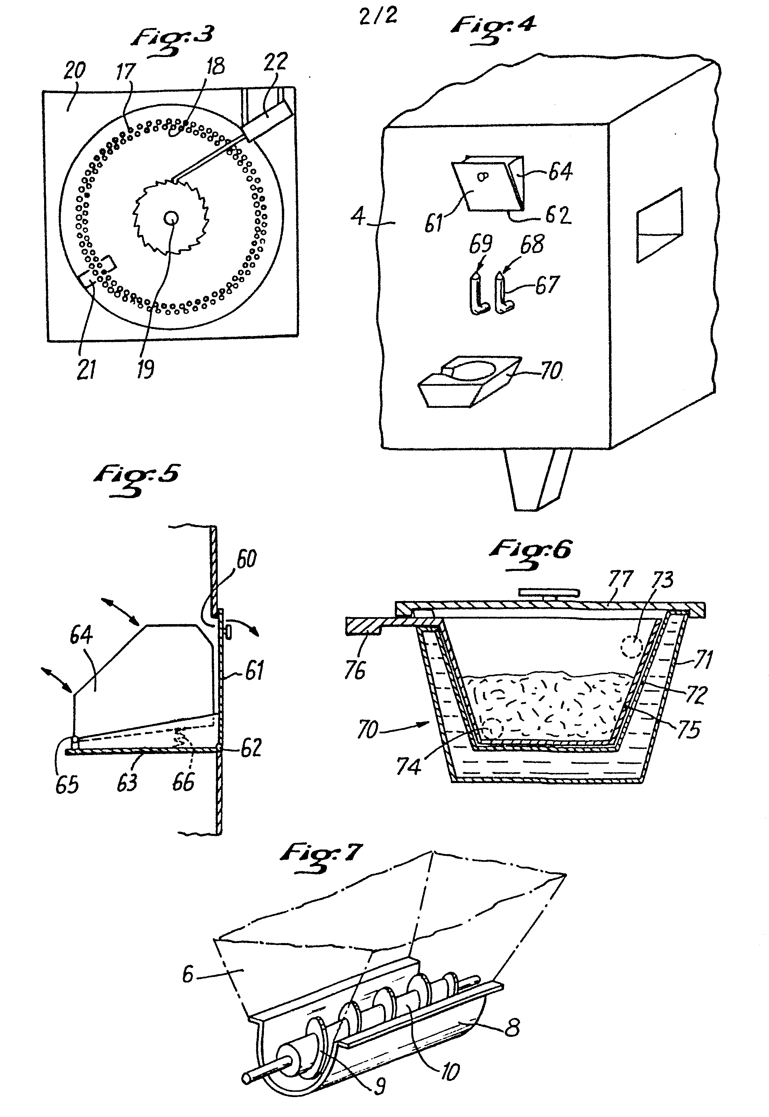

La figure 1 représente l'ensemble des éléments de la machine de distribution de produits alimentaires selon l'invention, dans son mode de realisation préférentiel.

Dans l'exemple de réalisation décrit, la machine est prévue pour distribuer deux produits, mais cet exemple n'est pas limitatif, et il est possible de n'en prévoir qu'un seul ou plus de deux ; de même le liquide de cuisson est ici de l'huile, mais elle pourrait être remplacée dans d'autres exemples de réalisation par tout autre liquide de cuisson, par exemple de l'eau.

La machine selon la figure 1 comporte réunis dans un boîtier 1 une chambre 2 de stockage et conservation de frites, une chambre 3 de stockage et conservation de saucisses , une unité 4 de cuisson des frites et saucisses , un sas 5 de communication entre les chambres de stockage et l'unité de cuisson, et une armoire de commande 26 programmée et reliée aux différents organes.

La chambre 2 comporte un dispositif de congélation de type standard connu et non représenté, et une trémie 6 de stockage de frites ou autres produits à cuisson par bain d'huile. Cette trémie 6 est munie supérieurement d'un couvercle 7 de remplissage, hermétique pour d'une part assurer l'isolation thermique, d'autre part éviter les fuites d'odeur de cuisson. Elle est fermée inférieurement par un conduit 8 en forme de gouttière (figure 7) ; celui-ci traverse horizontalement l'ouverture de la trémie et comporte intérieurement une vis sans fin 9 montée autour d'un cylindre 10 entraîné par un moteur 11. Les frites sont ainsi véhiculées sur le dessus et les côtés de la vis sans fin 9 et l'on obtient une distribution régulière du produit. En outre, ce montage présente l'avantage d'un entretien très simple.

La vis sans fin débouche sur le plateau 12 d'une balance 13 qui pivote et verse le produit vers l'unité de cuisson lorsque la quantité demandée est atteinte.

Dans l'exemple illustré, la balance et montée rotative autour d'un axe 14 dans toute l'ouverture de communication pratiquée entre la chambre 2 et le sas 5; de cette manière, on évite le maximum de fuites de vapeur de cuisson. Mais ce montage n'est pas limitatif et d'autres dispositifs de pesage peuvent être utilisés.

La balance 13 comporte un contacteur de commande de mise en marche et arrêt du moteur 11, ce contacteur (non représenté) fonctionnant selon le poids désiré, choisi par le consommateur.

La chambre 3 comporte un réfrigérateur conventionnel permettant de stocker et conserver des saucisses ou d'autres produits frais tels que des pâtés impériaux, du poisson, des boulettes de viande, etc. Ce réfrigérateur comporte un dispositif 15 de distribution des saucisses ou autres produits de forme voisine.

Ce dispositif 15 comporte un tambour cylindrique fixe, creux, relié aux parois de la chambre, muni d'un fond 20 également fixe, et ce tambour comporte intérieurement au moins une couronne cylindrique composée de tubes 16 verticaux. Le dispositif illustré sur la figure 3 comporte deux couronnes adjacentes 17, 18. Les tubes 16 de ces deux couronnes sont décalés de la moitié du diamètre des précédents de manière que le cylindre formé par les couronnes, tournant pas à pas autour de son axe central vertical 19 à l'aide d'un système de type connu, par exemple à cliquet et vérin 22, présente alternativement une saucisse d'une rangée puis de l'autre devant une ouverture 21 pratiquée dans le fond 20.

L'ouverture 21 est munie de préférence d'une fenêtre 23 du type à tiroir ou à guillotine qui donne sur le sas de communication 5 avec l'unité de cuisson 4, de sorte que la chambre 3 reste isolée de l'unité de cuisson lorsque la distribution de saucisses est achevée ; et cette fenêtre s'ouvre à chaque rotation du dispositif de distribution 15.

Selon une variante de réalisation de l'invention, un second système de distribution des saucisses ou autres produits, revêt la forme d'un cylindre tournant autour d'un axe. Ce cylindre possédant plusieurs gorges de l'épaisseur et de la longueur d'une saucisse, est en mesure, par rotation mécanique ou électrique, de laisser tomber par inertie une saucisse sur un contact, coupant ainsi ladite alimentation. La saucisse chutera dans une balance permettant l'évacuation de celle-ci par un système de trappe, approprié vers l'unité de cuisson : sachant que le cylindre se trouve coulissé librement dans une cage fixe, servant à la fois de support et permettant l'évacuation des aliments. Le chargement en saucisses se faisant sur la périphérie.

Selon l'invention, le système précédent est alimenté soit sur la périphérie du cylindre en aliments par l'intermédiaire d'une lucarne supérieure, évitant ainsi que le produit ne tombe de par son propre poids, sachant qu'ensuite il sera prisonnier de la cage fixe, soit par un ou plusieurs chargeurs stockant les saucisses et lequel cylindre entrainera une saucisse avec lui par rotation selon les mêmes principes que ceux cités précédemment.

La sollicitation extérieure commandant les moyens d'évacuation, tantôt indépendamment, frites seules ou saucisses frites, est fournie par les moyens déclencheurs, type monnayeurs ou autres, actionnant ainsi des fonctions électro-pneumatiques préréglées sur programmateur électrique ou électronique, amenant ainsi les produits dans l'unité de cuisson 4.

Un sas 5 de communication est prévu entre d'une part les chambres de stockage 2 et 3 et l'unité de cuisson 4. Le sas a la forme générale d'un entonnoir comportant deux ouvertures d'entrée supérieures donnant sur les chambres et une ouverture inférieure de sortie vers l'unité de cuisson.

Du côté de la chambre 2, l'ouverture est obturée par la balance pivotante 12, du côté de la chambre 3 l'ouverture 21 est obturée par la fenêtre 23, du côté inférieur vers l'unité de cuisson, l'ouverture 24 est protégée par une trappe 25 de sécurité du type à glissière.

Le sas comporte en outre un filtre au charbon destiné à éliminer les odeurs qui s'échappent de l'unité de cuisson à chaque ouverture de la trappe 25.

L'unité de cuisson 4, située sous les chambres de stockage 2 et 3, comporte deux parties séparées : une cuve de cuisson 30 et un réservoir d'huile 31.

Ces deux parties sont remplies partiellement d'huile par l'ouverture de remplissage 33 et communiquent entre elles inférieurement par une canalisation 32 permettant le libre écoulement de l'huile d'une partie à l'autre. L'ouverture de remplissage 33 est fermée par un bouchon étanche.

Les deux parties en outre communiquent entre elles supérieurement par un couloir 34 comportant un dispositif de refroidissement 35, du type à échange de chaleur, pour la condensation des vapeurs d'eau dues à la cuisson des produits alimentaires. Dans l'exemple illustré la surface du couloir est recouverte d'une paroi, creuse intérieurement, de refroidissement par eau. Le remplissage de cette paroi de refroidissement se fait par un bouchon 36 supérieur et la vidange par un robinet 37 dans la partie inférieure. En variante ce dispositif peut être alimenté en continu enliquide réfrigérant.

La surface inférieure 38 de cette paroi, orientée vers l'intérieur du couloir, est conique vers le bas et comporte au sommet du cône un conduit 39 d'évacuation de l'eau condensée, aboutissant dans un vase 40, muni d'un robinet de vidange 41.

Ce dispositif, en évacuant la vapeur d'eau de cuisson, évite les retombées de gouttes dans l'huile qui provoquent de bruyants bouillonnements et les évacuations dans l'atmosphère environnant. Le couloir comporte en outre, intérieurement, une turbine 80 ou tout autre moyen d'entraînement et d'accélération de l'écoulement de l'air chargé des vapeurs d'eau et d'huile. De préférence cette turbine est disposée dans l'axe d'entrée du couloir.

Pour que cette circulation forcée de l'air dans le couloir fonctionne correctement sans provoquer de surpression en aval de la turbine,on prévoit dans l'unité 4 un orifice 81 de mise à l'air libre.

De préférence cet orifice est muni d'un filtre 82, de type filtre à charbon qui absorbe les odeurs, et cet orifice est pratiqué sur la paroi du vase 40 de manière que les odeurs soient absorbées au maximum par l'eau de condensation.

Cet orifice est de faible dimensions de l'ordre de 3 millimètres de diamètre pour un volume d'air de l'ordre de 10 à 20 décimètres cubes.

Ce dispositif a l'avantage d'accélérer la condensation et d'éliminer les mauvaises odeurs en obligeant l'air à s'évacuer à travers le filtre, et en évitant toute fuite par une autre ouverture par exemple l'ouverture de distribution.

La cuve de cuisson 30 comporte de bas en haut :

- un robinet de vidange de l'huile de cuisson,
- une résistance 42 chauffante pour l'huile,
- un thermostat 43,
- une jauge de niveau 44 de l'huile, relié à l'armoire de contrôle électrique,
- un orifice d'évacuation 45 de trop plein sur la paroi de la cuve,
- un panier 46 de cuisson,
- une porte 47 de distribution,
- l'ouverture 24 du sas de communication, fermée par la trappe 25.

Le réservoir 31 d'huile comporte un volume lesté 50, mobile verticalement dans le réservoir : il plonge dans l'huile et en ressort sous l'action d'un câble 51 relié à un moyen de levage 52 de type connu, par exemple un treuil, de telle sorte que, par l'effet des vases communicants, lorsque le volume 50 plonge dans l'huile, le niveau de l'huile dans la cuve et dans le réservoir monte, et inversement lorsque le volume sort de l'huile, le niveau dans la cuve et dans le réservoir descend.

12

Ainsi le niveau de l'huile dans la cuve varie en fonction de la position du volume dans le réservoir.

Afin que le déplacement du volume 50 dans l'huile agisse efficacement sur le niveau de l'huile dans la cuve, il est préférable que le volume soit de conformation identique et de dimensions de section horizontale très voisine de celles du réservoir 31. Par exemple, le réservoir est cylindrique et le volume un cylindre, le lest 53 est réparti uniformément au fond dudit cylindre, ce choix ayant pour autre avantage de permettre les torsions éventuelles du câble 51 et les rotations du volume 50 autour du câble.

En outre, la valeur du volume est au moins égale au volume du panier de cuisson 46 de telle sorte que lorsque le volume est plongé dans l'huile, celle-ci recouvre complètement le panier.

Le moteur 52 de déplacement du volume est commandé par programme et contrôlé par la jauge de niveau 44 qui agit comme un interrupeur.

Dans la cuve de cuisson 30, la porte de distribution 47 est inclinée de haut en bas vers l'intérieur de la cuve afin de laisser ruisseler les condensations de vapeur d'eau ou d'huile vers l'intérieur. En outre, on prévoit à la partie inférieure de la porte, du côté cuve, une gouttière 48 de récupération du condensat et cette gouttière est prolongée (en tirets sur la figure) le long de la paroi de la cuve jusqu'à la conduite 39 ou au vase d'évacuation 40.

La porte de distribution 47 est montée sur une charnière d'axe de rotation 49, et elle est maintenue fermée par des ressorts non représentés.

Le panier 46 est monté, comme on le voit sur la figure 2, à l'extrémité d'une tige 54 ; cette tige comporte à son autre extrémité une pièce 55 en forme de came montée sur l'axe de rotation 49. Un vérin, ou tout autre dispositif de ce type, non représenté, commande la rotation du panier 46 autour de cet axe de rotation 49. Au bout d'une certaine rotation du panier, la came vient en butée sur la pórte 47 qui s'ouvre en même temps que le panier continue sa rotation et se renverse pour distribuer le produit dans un récipient 56.

Le fonctionnement du distributeur est le suivant:

- on sélectionne une portion déterminée de frites avec ou sans saucisse à l'aide d'un monnayeur et d'un clavier prévu à cet effet (non représentés),

- la machine est en position repos : le volume 50 en position haute, le panier 46 vide hors de l'huile,

- la machine distribue le ou les produits dans le panier de cuisson ; selon les produits, la distribution peut être réalisée séparément, chaque produit pouvant être cuit l'un après l'autre,

- les résistances 42 chauffent l'huile,

- le volume descend dans l'huile, jusqu'à immersion totale du panier, par effet de vases communicants. En cas de dépassement excessif du niveau du panier 46, l'huile excédentaire s'évacue par le trop plein 45, afin d'éviter tout écoulement par la porte de distribution,

- au moment de l'immersion et pendant la cuisson, la vapeur d'eau se répartit dans le volume supérieur de l'unité de cuisson, et traverse le couloir où elle se condense sur les parois ; la vapeur d'eau restant se condense sur la surface inclinée de la porte de distribution et s'écoule dans le vase d'évacuation,

- les vapeurs d'huile se condensent sur les parois de la cuve ou du réservoir et retournent dans le bain,

- lorsque la cuisson est finie (minuterie programmée), le volume remonte dans le réservoir, et le niveau de l'huile baisse dans les deux parties de l'unité de cuisson , et le panier s'égoutte pendant quelques secondes,

- après égouttage, le panier 46 pivote autour de l'axe 49, ouvre avec la came 49 la porte de distribution. Les aliments tombent dans un gobelet 56 positionné préalablement, manuellement ou automatiquement par un distributeur annexé. Le panier 25 vidé de son contenu, lesté d'un contrepoids revient à sa position initale, et la porte 47 se referme sous l'impulsion des ressorts.

Selon une variante de réalisation illustrée figures 4, 5, 6, l'unité de cuisson comporte en outre :

1) Sur sa paroi une ouverture 60 et un tiroir 61 destinés à introduire manuellement dans le panier de cuisson 46 des produits à cuire, par exemple du poisson alors que le tambour ne contiendrait que des saucisses; le tiroir dans cette variante est monté pivotant horizontalement autour d'une charnière 62, et comporte un volet de fond 63 débordant par rapport aux dimensions de l'ouverture 60 et venant butée sur les bords de l'ouverture afin d'éviter, lorsque le tiroir est ouvert, le passage vers l'extérieur des odeurs et vapeur d'huile.

A l'intérieur, le tiroir comporte un panier basculant 64 vers l'intérieur de la cuve, monté à pivot sur un axe 65. Ce panier est relié au tiroir par un ressort 66 limitant ainsi le basculement. Ce jeu de débattement du panier permet d'assurer la projection dans le panier de cuisson 46 des produits introduits dans le tiroir.

2) Au moins un tube 67 cylindrique, s'étendant depuis la paroi de l'unité de cuisson vers l'extérieur, et disposé à un niveau assez bas pour être parcouru par l'huile chaude, de sorte que ces tubes peuvent recevoir des pains et réchauffer l'intérieur avant d'y placer une saucisse chaude , l'extrémité 60 du tube étant conique. Les tubes pourront être horizontaux ou verticaux, cette dernière disposition étant plus favorable pour une question d'encombrement. Dans ce cas, l'extrémité conique 60 est située à un niveau supérieur à l'orifice de trop plein 45 et comporte un orifice de fuite 69 pour assurer l'évacuation de l'air lors du remplissage et inversement.

3) Une cuvette 70, disposée sur la paroi de l'unité ; cette cuvette est à double parois 71, 72 entre lesquelles circule l'huile chaude, admise par des orifices 73, 74 en relation avec l'unité 4 de

15

façon à permettre le réchauffage d'un produit frais ou précuit ou une sauce, disposé dans un récipient amovible 75, muni d'une poignée 76 ; le récipient a de préférence la même conformation que le creux de la cuvette pour avoir une bonne transmission thermique. En outre, un couvercle 77 permet de protéger des poussières et autres impuretés le contenu du récipient amovible.

Dans la description qui précède, le distributeur comporte en outre tous moyens de motorisation connus, asservis par un ou des boitiers de contrôle et programmation 26.

Ce distributeur peut comporter en outre, directement sur l'appareil ou indirectement un distributeur de gobelet ou autre récipient destiné à recevoir le produit alimentaire, ainsi qu'un distributeur complémentaire de condiments en sachet ou dose.

Revendications

1- Dispositif de distribution automatique de produits alimentaires du type comportant au moins une chambre de stockage et conservation de produits alimentaires, munies chacune d'un dispositif de communication avec une unité de cuisson par bain d'huile ou autre liquide de cuisson, laquelle unité est du type à changement de niveau et comporte : deux parties distinctes, une cuve et un réservoir, remplies partiellement de liquide de cuisson, communiquant entre elles par leur niveau inférieur par une canalisation pour l'écoulement du liquide entre les deux parties une ouverture de remplissage fermée par un bouchon étanche, un entonnoir de réception des produits dans la cuve , un panier de cuisson, des résistances de chauffage du bain et un thermostat, une porte de distribution pour la restitution des produits après cuisson, caractérisé en ce que les deux parties (30,31) en outre communiquent entre elles à leur niveau supérieur par un couloir (34) comportant un dispositif de réfroidissement (35), du type à échange de chaleur, pour la condensation des vapeurs dues à la cuisson, la cuve (30) comportant le panier de cuisson (46), le réservoir (31) comportant un volume lesté (50), mobile verticalement dans le réservoir afin de plonger dans le bain (27) de liquide et/ou d'en ressortir, de telle sorte que le niveau du bain dans l'unité de cuisson varie, et que par effet de vases communicants, selon la position du volume (50), le liquide recouvre le produit ou bien le découvre et le laisse s'égoutter.

2- Dispositif de distribution automatique de produits alimentaires selon la revendication 1 caractérisé en ce que le volume lesté (50) est de conformation identique et de dimensions de section horizontale très voisines de celles du réservoir (31) dans lequel il coulisse, et la valeur de ce volume est au moins égale au volume du panier de cuisson (46) et il est relié par un câble vertical (51) à un moyen de levage (52), de type connu en soi, contrôlé par programme, destiné à assurer la descente ou le levage du volume dans le réservoir (31).

3- Dispositif de distribution automatique de produits alimentaires selon la revendication 2 caractérisé en ce que le réservoir (31) et le volume (50) sont cylindriques de section horizontale circulaire afin d'autoriser d'éventuelles rotations du volume autour du câble (51).

4- Dispositif de distribution automatique de produits alimentaires selon la revendication 1 caractérisé en ce que le couloir (34) supérieur de communication des deux parties (30,31) comporte sur sa surface une paroi, creuse intérieurement (35) de refroidissement dont la face inférieure (38), orientée vers l'intérieur du couloir est conique vers le bas et comporte au sommet du cône un conduit (39) d'évacuation de l'eau condensée, aboutissant dans un vase (40) comportant une ouverture de vidange,

5- Dispositif de distribution automatique de produits alimentaires selon la revendication 1 caractérisé par le fait que le couloir comporte intérieurement un moyen (80) d'entraînement et d'accélération de l'air chargé de vapeurs d'eau et d'huile, et l'unité de cuisson comporte un orifice (81) de mise à l'air libre muni d'un filtre (82) déodorant

6- Dispositif de distribution automatique de produits alimentaires selon les revendications 4 et 5 caractérisé par le fait que l'orifice (81) de mise à l'air libre est situé dans la paroi du vase (40)

7- Dispositif de distribution automatique de produits alimentaires selon la revendication 4 caracterisé en ce que la paroi de refroidissement (35) comporte les moyens d'alimentation (36) et de vidange (37).

8- Dispositif de distribution automatique de produits alimentaires selon la revendication 4 caracterisé en ce que la porte de distribution (47) est inclinée de haut en bas vers l'intérieur de la cuve de cuisson (30) et comporte à sa partie inférieure, du côté cuve,

18

**0234996**

une gouttière (48) pour la récupération de la condensation, et la gouttière est prolongée le long de la paroi de la cuve jusqu'à la conduite ou au vase d'évacuation.

9- Dispositif de distribution automatique de produits alimentaires selon la revendication 1 caractérisé en ce que le panier de cuisson (46) est monté sur un axe de rotation (49) comportant une came (55) provoquant lors de la rotation dudit panier, l'ouverture de la porte de distribution (47).

10- Dispositif de distribution automatique de produits alimentaires selon la revendication 1 caracterisé en ce que la chambre (2) de stockage de frites est du type comportant à sa partie inférieure une trémie (6)fermée à sa base par un conduit (8) transversal en forme de gouttière, au fond duquel est logée une vis sans fin (9) montée autour d'un cylindre (10), commandé en rotation par un moteur (11) asservi, et il est caractérisé en ce que à l'extrémité du conduit (8) est disposée une balance (13) munie d'un plateau (12) de réception des frites convoyées par la vis sans fin et d'un contacteur pour arrêter le moteur lorsque le poids désiré est atteint et en ce que la balance est montée en rotation (14) de sorte que lorsque le poids de frites est atteint, son plateau pivote et déverse les frites à l'intérieur de l'unité de cuisson et revient à sa position initiale par contrepoids ou équivalent.

11- Dispositif de distribution automatique de produits alimentaires selon la revendication 1 caracterisé en ce que la chambre (3) de stockage de saucisses comporte un cylindre formé d'une ou de plusieurs couronnes concentriques (17,18) de tubes verticaux (16) cylindriques de stockage, juxtaposés,les tubes des couronnes adjacentes étant décalés tangentiellement.

12- Dispositif de distribution automatique de produits alimentaires selon la revendication 9 caracterisé en ce que le cylindre (15) est monté rotatif autour de son axe vertical (19)et au-dessus d'une fenêtre (23) fixe, destinée au passage des saucisses, située à la périphérie du cylindre sous la couronne (17,18), laquelle fenêtre débouche par un conduit sur l'entonnoir de réception des produits, et il est muni d'un dispositif du type à vérin et cliquet (22) qui l'entraîne en rotation pas à pas, ouvre la fenêtre (23), de telle sorte que les saucisses sont distribuées successivement d'une couronne (17) à l'autre(18).

13- Dispositif de distribution automatique de produits alimentaires selon la revendication 1 caracterisé en ce que il comporte sur la paroi de l'unité de cuisson (4)une ouverture (60) et un tiroir (61) destinés à introduire manuellement dans le panier de cuisson (46) des produits à cuire, ledit tiroir étant monté pivotant horizontalement et comportant un volet (63) venant en butée sur les bords de l'ouverture pour éviter, lorsque le tiroir est ouvert, le passage vers l'extérieur des odeurs et des vapeurs d'huile et en ce qu'il comporte de plus un panier intérieur (64) monté pivotant (65) vers l'intérieur du compartiment, muni d'un ressort (66) fixé sur le volet, permettant audit panier un léger débattement favorisant l'éjection des produits au moment de la fermeture du tiroir,

14- Dispositif de distribution automatique de produits alimentaires selon la revendication 1 caracterisé en ce qu'il comporte au moins un tube cylindrique (67) faisant saillie depuis une des parois verticales de l'unité de cuisson à un niveau lui permettant de recevoir intérieurement le liquide de cuisson pour réchauffer l'intérieur des produits alimentaires -par exemple du pain- de façon connue en soi, l'extrémité du tube (68) étant conique et le tube est coudé verticalement, son extrémité conique etant à un niveau situé au-dessus de l'orifice de trop plein et comportant un orifice de fuite pour assurer l'évacuation de l'air lors du remplissage et inversement.

15- Dispositif de distribution automatique de produits alimentaires selon la revendication 1 caracterisé en ce qu'il comporte en outre, une cuvette (70) à double parois (71,72) entre lesquelles circule le liquide chaud admis par au moins un orifice (73,74) communicant avec l'une des parties de l'unité de cuisson (4) pour le réchauffage d'un produit frais ou précuit ou d'une sauce, disposé dans un récipient (75) amovible muni d'une poignée (76), ledit récipient épousant la forme intérieure de la cuvette, ladite cuvette étant protégée de l'environnement par un couvercle (77).

*Fig. 1*

*Fig. 2*

0234996

Fig.3

Fig.4

Fig.5

Fig.6

Fig.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,A | DE-A-1 579 442 (NEFF-WERKE)<br><br>* Page 2, ligne 13 - page 3, ligne 3; revendications 1,3, figures 1,2 *<br><br>--- | 1-10, 12-15 | G 07 F 9/10<br>A 47 J 37/12 |
| D,A | FR-A-2 248 809 (GRANDI)<br>* Revendication 1 *<br><br>--- | 1,4-15 | |
| D,A | EP-A-0 060 204 (MARIOTTI)<br>* Résumé; page 1, ligne 1 - page 2, ligne 22; page 3, ligne 9 - page 4, ligne 8; page 7, lignes 10-28; page 10, ligne 20 - page 11, ligne12; revendications 1-5,8; figures 1,2 *<br><br>--- | 1-10 | |
| A | FR-A-2 249 637 (CHEMETRON)<br>* Page 1, lignes 1-4; page 1, lignes 33-38; page 4, lignes 12-35, revendications 1,10,11; figures 1,4,12 *<br><br>--- | 2-9 | **DOMAINES TECHNIQUES RECHERCHES (Int Cl 4)**<br><br>G 07 F<br>A 47 J |
| A | US-A-3 357 341 (KOCKEN)<br><br>* Résumé; colonne 1, ligne 31 - colonne 2, ligne 31; colonne 3, lignes 39-49; revendications 1,3,7,8; figures 2,3 *<br><br>--- -/- | 2,3,7, 10,13 | |

Le présent rapport de recherche a été établi pour toutes les revendications

| Lieu de la recherche | Date d'achèvement de la recherche | Examinateur |
|---|---|---|
| LA HAYE | 14-05-1987 | GUIVOL,O. |

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | US-A-2 134 088 (OBDYKE) <br> * Colonne 1, lignes 4-27; revendication 1 * <br><br> ----- | 1 | |

DOMAINES TECHNIQUES RECHERCHES (Int. Cl 4)

Le présent rapport de recherche a été établi pour toutes les revendications

| Lieu de la recherche | Date d'achevement de la recherche | Examinateur |
|---|---|---|
| LA HAYE | 14-05-1987 | GUIVOL,O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82